# EUROPEAN PATENT APPLICATION

(11) **EP 1 674 991 A2**
(43) Date of publication of application: **28.06.2006**
(21) Application number: 05110039.4
(22) Date of filing: 26.10.2005
(51) Int. Cl.: G06F 9/44

(54) **System and method for creating web services from an existing web site**

(30) Priority: 23.12.2004 EP 04300943
(71) Applicant: International Business Machines Corporation, Armonk, N.Y. 10504 (US)
(72) Inventor: Mommeja, Lionel, 06100, NICE (FR); Loupia, David, 06510, CARROS (FR)
(74) Representative: Therias, Philippe

(57) **Abstract**

A system (40) and method (50) for generating web services (42) from an existing web site (18) having web page based business processes or transactions. A script is generated representative of the user navigation sequence involved to perform the transaction. The script elements include the web application calls, input/output parameters, and the interrelation between the elements of the transaction. A WSDL file, web service interface code, and web service implementation code are generated from the navigation script, and may be published locally to the web site or on a remote site.

## Description

### Field of the Invention

This invention relates to web services technology, and more particularly to publishing web page based transactions as web services from an existing web application.

### Background of the Invention

Every year, more and more business is being transacted over the internet. Business processes or transactions conducted over a network such as the internet are typically implemented through web pages with software components called web applications enabling the transactions. Some enterprises having internet sites with transactional capabilities offer business to customer (B2C) or business to business (B2B) communications.

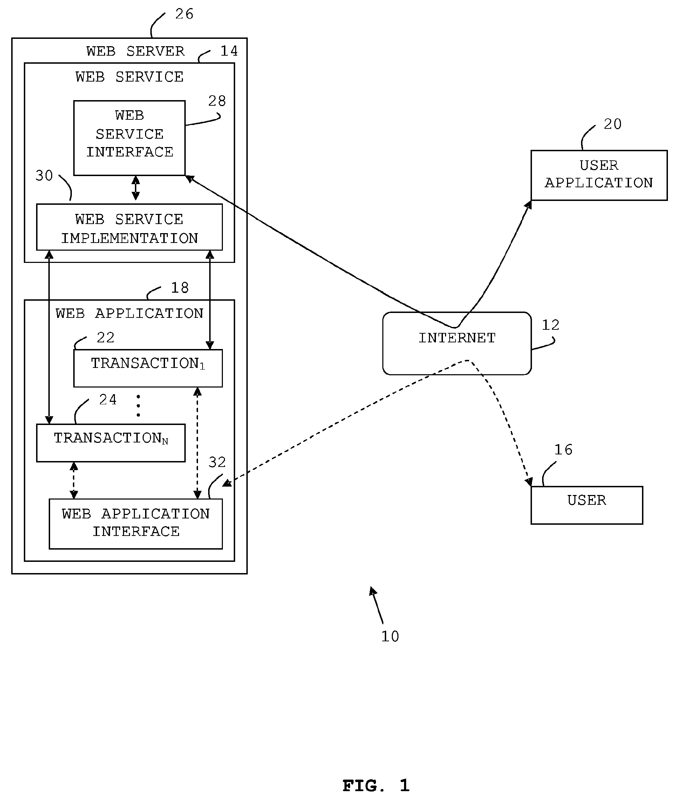

B2C communication is described with reference to FIG. 1. Traditionally a user 16 conducts transactions on the internet 12 with a web application interface 32 of the web application 18 as shown via the dashed arrows in FIG. 1. The user typically accesses the transactions 22-24 of the web application 18 via the internet 12 and the web application interface 32 through web pages of the web application. Web pages are typically written in hypertext markup language (HTML) for browsers on personal computers, wireless markup language (WML) for browsers on mobile phones, or the like. The web application 18 presents an interface to the user by providing web pages which the user navigates to perform the transactions 22,24.

B2B communication is also described with reference to FIG. 1. For B2B communication, the web application on the server side must provide a programming interface to client applications. For this purpose, web services have been developed.

A web service is a software component that is well understood by a skilled person in the industry. The strength of web services is the standardized way to integrate various heterogeneous applications without the prior knowledge of the specific implementation of each application. Web services allow different applications implemented in different sources to communicate by using standardized description language such as Web Service Description Language (WSDL), simple object access protocol (SOAP), and universal description, discovery, and integration (UDDI). A WSDL file is a description language file written in extensible markup language (XML) that describes the functions and their associated input/output parameters provided by the web service which may be called by a user application (also called a web service client). The user application before accessing the web service reads the WSDL file and adapts its calls accordingly. The WSDL file may be stored on the same server as the server hosting the web service or in a different server or directory. Web services allow a programmatic access to distributed transactions over the internet to provide data or functionality to another application.

However, creating, deploying and publishing web services to conduct transactions for web applications is complex and requires advanced programming skills. The amount of programming required is time intensive and the cost involved is substantial, for example complex components such as application servers are typically required. Often, enterprises are not able to afford the expense associated with web services technology.

The current approach to build and deploy a web service 14 is shown in the computer network system 10 of FIG. 1. Such web services are typically programmed by the service provider or owner of the web application 18 and implemented on the same web server 26 hosting the web application. The web service 14 consists of two logical blocks, one for interfacing with the user application 20, i.e. the web service interface 28, and one for interfacing with the web application 18, i.e. the web service implementation 30. Knowledge of the web server and web application language code allows the owner to program and deploy the web service interface 28 and web service implementation 30 that interacts directly with the code of the web application to conduct the transactions 22-24. The web service interface 28 interacts with a user application 20 via a network, such as the internet 12, to execute calls from the user application and conduct the transactions 22-24 of the web application 18. The web service interacts directly with the transactions via the web service implementation 30. Although advanced programming skills are required to implement the web service, this is a common technique of implementing web services that is well known in the art. The interrelation between user application, web application transactions, and web service is shown via solid arrows in FIG. 1.

The main problems with previous approaches are that advanced programming skills are necessary and knowledge of transaction interface of the web application is required to implement and deploy the web service. There is a need for a system and a method for generating web services that alleviates the problems associated with the previous approaches.

### Statement of the Invention

It is an object of the invention is to provide a system and method to develop a web service without having the knowledge of the web application transaction programming interface.

In accordance with the present invention there is provided a method for generating a web service providing a programming interface between a web application and a user application, the method comprising the steps of creating a script of a navigation flow of at least one transaction of the web application, the navigation flow representative of interactions between a user and the web application interface of the web application during the at least one transaction; creating a text file describing a function and input or output parameters to be called by the user application for executing the at least one transaction represented by the navigation flow; creating a web service interface code corresponding to the call of functions as described in the text file; and creating a web service implementation code for executing the interactions corresponding to the at least one transaction as represented by the navigation flow.

An embodiment creates a script of the navigation by recording the navigation flow of a human user conducting a transaction in the web application. The script of the navigation flow of the web service implementation code may be generated by a regression test tool. The script of the navigation flow may be written in script language. A text file is created taking the navigation flow script as input. The text file may be a WSDL file.

Another aspect of the invention provides a system for generating a web service providing a programming interface between a web application and a user application, the system comprising means for creating a script of a navigation flow of at least one transaction of the web application, the navigation flow representative of interactions between a user and the web application interface of the web application during the at least one transaction; means for creating a text file describing a function and input or output parameters to be called by the user application for executing the at least one transaction represented by the navigation flow; means for creating a web service interface code corresponding to the call of functions as described in the text file; and means for creating a web service implementation code for executing the interactions corresponding to the at least one transaction as represented by the navigation flow.

In an embodiment the text file may be generated by processing the script of the navigation flow which records of a human user conducting a transaction in the web application. The script of the navigation flow of the system web service implementation code may be generated by a regression test tool. The navigation flow may be written in script language, and the text file may be a WSDL file. The web service may be implemented in a web server hosting the web application. In another embodiment the web application may be hosted on a web server, and the web service may be hosted by another server.

With the solution of an embodiment of the invention, a web service may be built without the knowledge of the transaction programming interface which usually belongs to the web application owner. Consequently, a web service may be developed according to an embodiment of the invention by the client application owner or an internet service provider.

Another advantage of the method of an embodiment of the invention is that the steps may be automated with the use of existing test tools and/or by writing a program to create the WSDL file from a navigation flow and/or a program to translate WSDL into a web service interface code, and/or a program to create the web service implementation code from a navigation flow. All the programs may be written by a person skilled in the art without much difficulty to develop.

Finally, with the solution of an embodiment of the invention, a web application providing B2C communication to users may be enriched with this method for developing a web service providing a B2B communication to user applications.

### Brief Description of the Drawings

A system and method for generating web-page based process or transaction as a web service from a web site incorporating the present invention will now be described, by way of example only, with reference to the accompanying drawings, in which:
FIG. 1 shows a computer network system with a web service implementation according to the prior art;
FIG. 2 shows a computer network system implementing an embodiment of the invention; and
FIG. 3 shows a method in accordance with an embodiment of the invention.

### Description of Preferred Embodiments

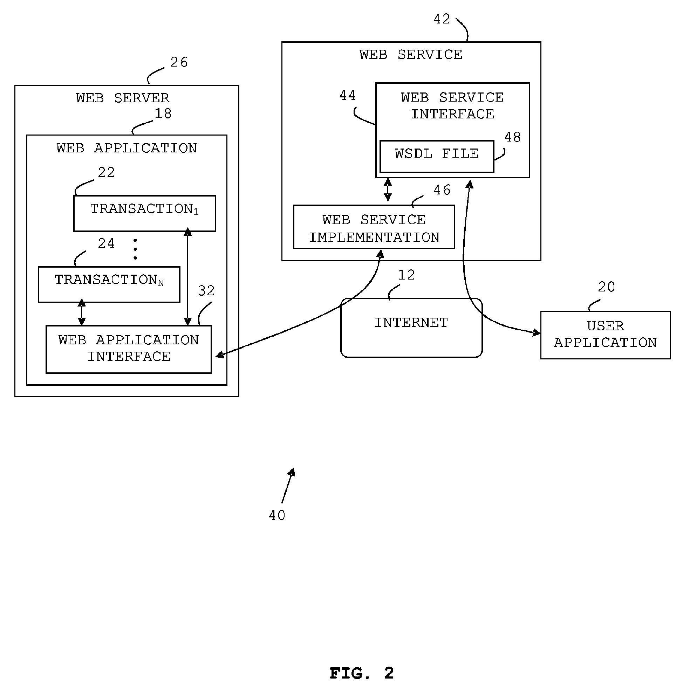

An embodiment of the invention may be implemented in the computer network 40 shown in FIG. 2. A web application is implemented on a web server 26 or an external web site provider in a network such as the internet 12. The web application is implemented on the web server 26 with one of any number of platforms that are well known in the industry. A web server may be configured to host one or more web applications 18. The web application may be configured with at least one transaction_{1-N} 22-24. Of course, it will be appreciated that transaction 22-24 may include transactions as defined in the broadest sense, such as processes, retrieval of information, perform a function, or the like, and is not taken to be limited to merely business transactions. A user application 20 may send calls for conducting the transactions of the web application via the web service 42. The web service may be created on the basis of an existing web application without requiring any change to the existing application interface. The web service 42 may be implemented on the web server 26 of the web application 18 or on another server separate or external from web server 26. A web service implementation 46 of the web service 42 of the preferred embodiment interacts with the web application 18 via the same web application interface 32 which is available to the user 16 of the web application.

In FIG. 2, in the web service of an embodiment of the invention, the web service 42 interfaces and interacts with the web application 18 via the internet 12 with the web application interface 32 of the web application 18. A user application 20 calls transactions 22-24 in the web application 18 of the web server via a web service interface 44. A WSDL file 48 from the web service interface 44 of the web service 42 is initially read by the user application 20 before sending calls to the web service interface 44. The web service interface 44 receives the calls from the user application 20, and communicates the calls via web service implementation 46 across the network 12 to the web application interface 32 of the web application 18 to run the transactions 22-24. The web service implementation calls the web application interface and simulates the web page interactions which are made by a user running a transaction of the web application.

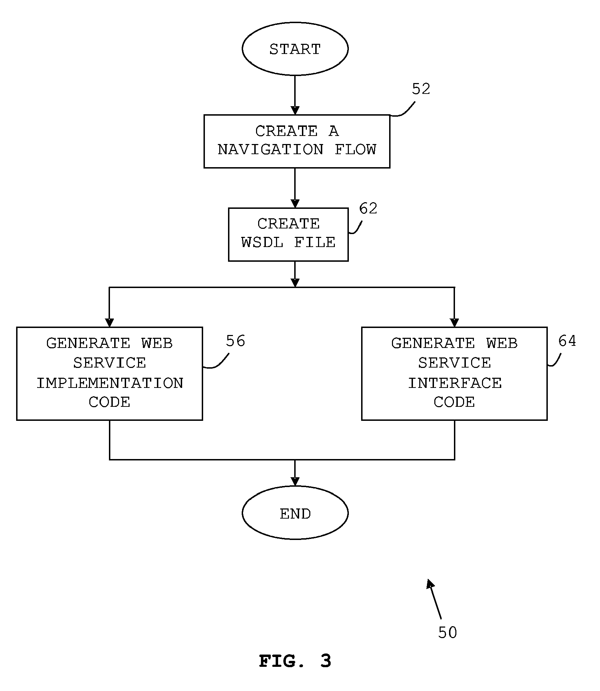

In an embodiment of the invention the user application 20 acts as a web service client to perform a function such as a transaction 22-24 remotely. It will be appreciated that the client or user application 20 may interface or call one or more web services 42 via the internet, however only one web service 42 is shown for illustrative purposes. The web service 42 or portions of the web service may be generated manually or automatically, as discussed in further detail with reference to FIG. 3, from the existing web application in order to allow connection from the client application. In another embodiment, the web service 42 may be hosted (not shown) by the same web server 26, or the web service may be hosted by an external service provider.

An embodiment of the invention is shown as a method 50 in FIG. 3. The method is for the generation of web services from an existing web application having transactions. The web service comprises code having a module representative of the web service interface, and a module representative of the web service implementation. A navigation flow is first defined or created 52 to represent the web page interaction that the user activates while running a transaction. A script may be generated via a graphical user interface. Any other possible representation of the web page interaction forming the navigation flow may be used. The script may be stored in a memory (not shown) in the developer work station. The script may be defined in any format that captures and defines in detail the series of manual steps or interactions the client user conducts in the web pages of the web site for completing the transaction. A sample script generated from a user navigation of a web site to load a single page is:

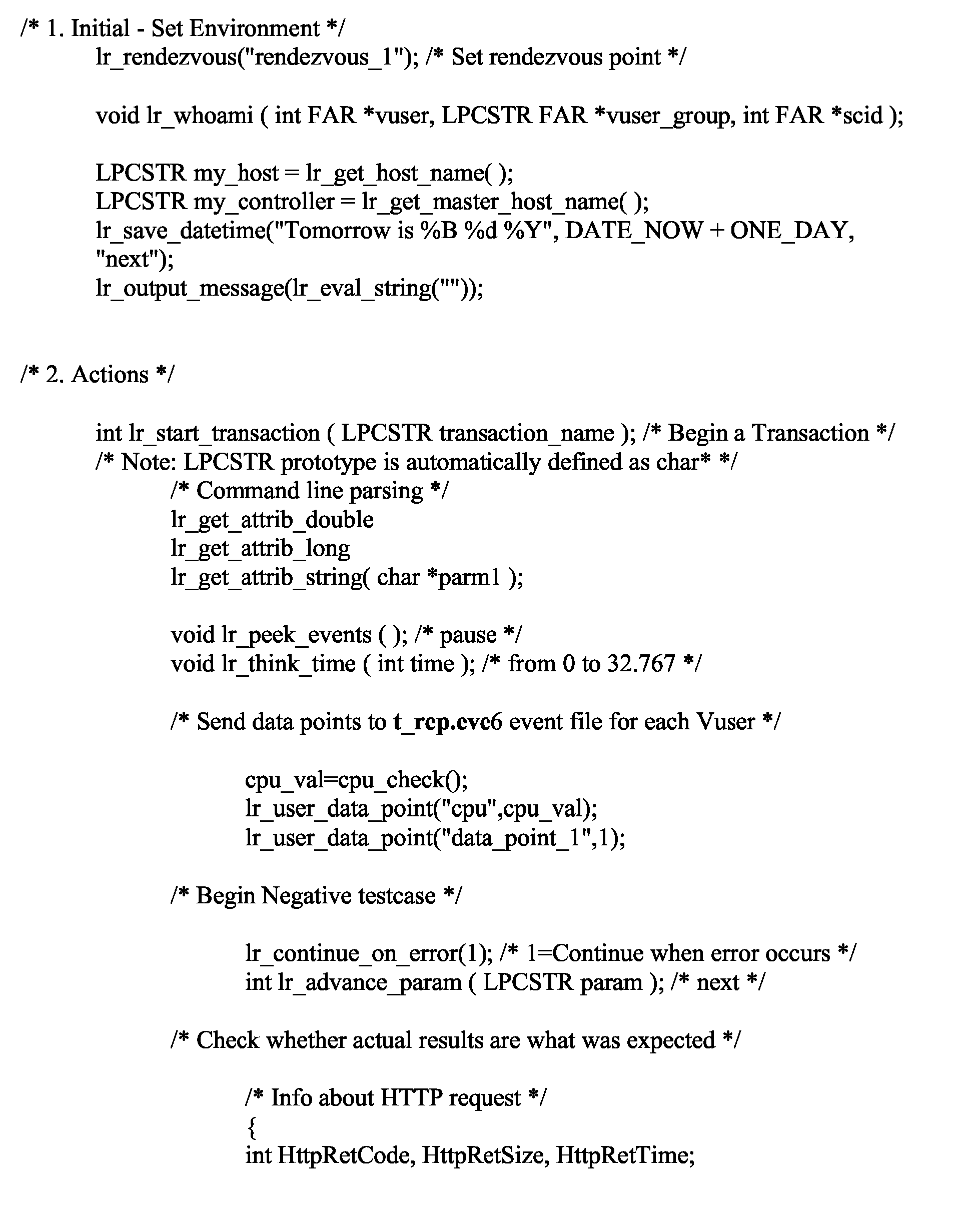

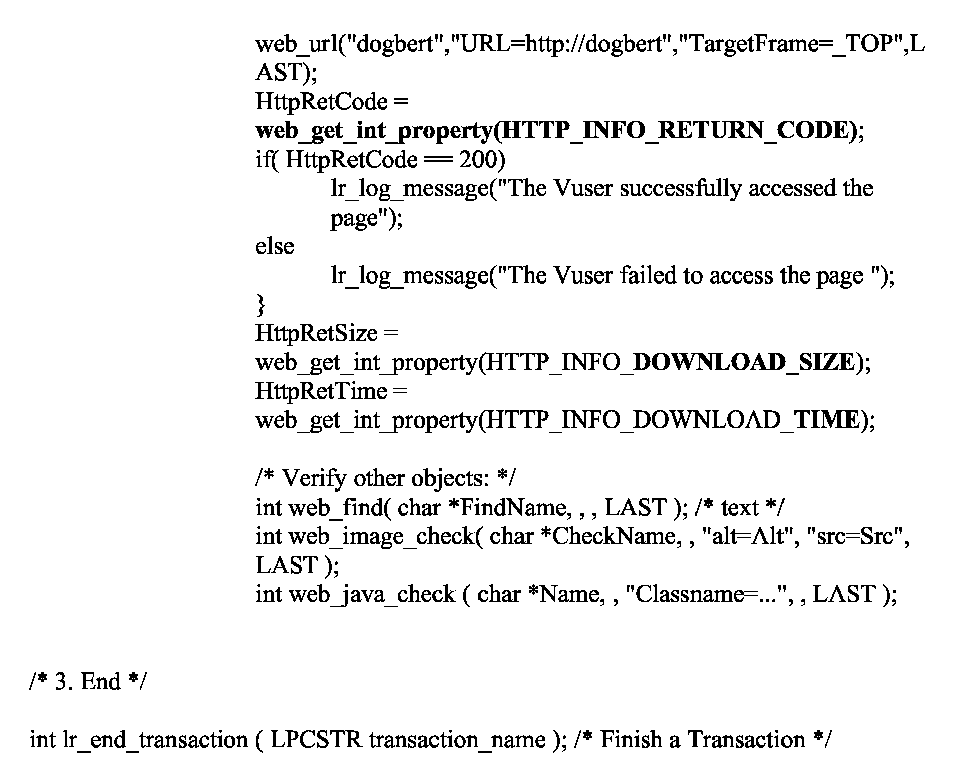

The above script is provided for illustrative purpose having one web page interaction. An actual script would likely contain several interactions. Each transaction of the web application may be represented by such a script.

The script may be created manually, or in another embodiment, the script may be produced by a web site test tool such as IBM RATIONAL SUITE TESTSTUDIO (IBM, RATIONAL SUITE, and TESTSTUDIO are trademarks of International Business Machines Corporation in certain countries) available from International Business Machines Corporation, Armonk, New York, or LOADRUNNER (LOADRUNNER is a trademark of Mercury Interactive Corporation in certain countries) available from Mercury Interactive Corporation, Sunnyvale, California. The web service code may then be generated from the existing web application using the navigation flow stored as script files in the preferred embodiment. The web service implementation 46 and the web service interface 44 are generated. The web service interface 44 and the web service implementation 46 may be generated in parallel as shown in FIG. 3 or in any other order.

The web service implementation code is generated 56 from the navigation flow. The web service implementation code simulates the web page interactions for transactions 22-24. The web service implementation 46 interfaces or interacts with the web application interface 32.

In another embodiment, the web service implementation code may be generated automatically by a web site test tool, which generates regression tests such as IBM RATIONAL SUITE TESTSTUDIO. These tools create the code simulating the module for interaction between web pages. The web service implementation may be written in Java code, .net or the like.

To generate the web service interface code to interact and interface with client or user application 20, a WSDL file is created 62 from the navigation flow. The script is translated 44 by a script translator into a programming language to describe web services, such as a WSDL file, for describing the function and the input and output parameters for each step of each transaction. For example in one scenario the function of the transaction may be ordering a book where input and output parameters may include book title, author name, international standard book number (ISBN), or the like. The process of translating may be achieved manually. A person skilled in the art may also develop a program translating script of the navigation flow to WSDL.

Once the navigation script is translated into a language such as WSDL to describe a web service functions with their input/output parameters, the web service interface code is then generated 64. The web service interface code is generated from the WSDL file. The code may be any type of code that is compatible within the system environment, for example Java, .net, or the like. The step of web service interface code generation may be also automated if a program is developed. A person skilled in the art may develop such a program translating WSDL into Java code or the like.

The web service implementation mainly consists of modules within the web service, for example a module for calls to the functions with input and output parameters that a similar to the call registered in the generated script, and a module for code to simulate interactions within the web pages during the transaction.

It will be understood that the system and method for generating web services from an existing web application described above provides advantages, such as generation of web services from web-page based transactions. Another advantage is that the web service is generated based on the transaction conducted on web pages within a web site without express knowledge of the application. With this configuration, the generation and subsequent maintenance of the web service is less complex than previously achievable, and web-page based transactions may be deployed as web services from an existing web application. It will be appreciated that specific embodiments of the invention are discussed for illustrative purposes, and various modifications may be made without departing from the scope of the invention as defined by the appended claims.

## Claims

1. A method (50) for generating a web service (42) providing a programming interface between a web application and a user application, said method comprising the steps of:
creating (52) a script of a navigation flow of at least one transaction of the web application (18), the navigation flow representative of interactions between a user (16) and the web application interface (32) of the web application during said at least one transaction (22,24);
creating a text file (62) describing a function and input or output parameters to be called by the user application (20) for executing the at least one transaction represented by the navigation flow;
creating a web service interface code (64) corresponding to the call of functions as described in the text file (48) ; and
creating a web service implementation code (56) for executing the interactions corresponding to the at least one transaction as represented by the navigation flow.

2. The method of claim 1 wherein said creating a text file (62) is generated by recording the navigation flow of a human user conducting a transaction (22,24) in the web application (18).

3. The method of claim 1 or 2 wherein said creating a web service implementation code (56) the navigation flow is generated by a regression test tool.

4. The method of any one of claims 1 to 3 wherein the navigation flow is written in script language.

5. The method of any one of claims 1 to 4 wherein the text file is a WSDL file (48).

6. A system (40) for generating a web service (42) providing a programming interface between a web application (18) and a user application (20), said system comprising:
means for creating a script of a navigation flow of at least one transaction of the web application (18), the navigation flow representative of interactions between a user (16) and the web application interface (32) of the web application during said at least one transaction (22,24);
means for creating a text file (48) describing a function and input or output parameters to be called by the user application for executing the at least one transaction represented by the navigation flow;
means for creating a web service interface code (64) corresponding to the call of functions as described in the text file (48); and
means for creating a web service implementation code for executing the interactions corresponding to the at least one transaction as represented by the navigation flow.

7. The system of claim 6 wherein said text file (48) is generated by recording the navigation flow of a human user conducting a transaction (22,24) in the web application (18).

8. The system of claim 6 or 7 wherein said navigation flow of the web service implementation code is generated by a regression test tool.

9. The system of any one of claims 6 to 8 wherein the navigation flow is written in script language.

10. The system of any one of claims 6 to 9 wherein the text file is a WSDL file (48).

11. The system of any one of claims 6 to 10 wherein the web service (42) is implemented in a web server (26) hosting the web application (18).

12. The system of any one of claims 6 to 10 wherein the web application (18) is hosted on a web server (26), and the web service (42) is hosted by another server.
